# FASCICULE DE BREVET EUROPEEN

(11) **EP 2 737 610 B1**
(45) Date de publication et mention de la délivrance du brevet: **30.12.2015**
(21) Numéro de dépôt: 12743535.2
(22) Date de dépôt: 16.07.2012
(51) Int. Cl.: H02K 5/22, H02K 5/02, H02K 19/36

(54) **BOÎTE À BORNES**
ANSCHLUSSKASTEN
TERMINAL BOX

(30) Priorité: 28.07.2011 FR 1156915
(43) Date de publication de la demande: 04.06.2014
(73) Titulaire: Moteurs Leroy-Somer, 16915 Angouleme Cedex 9 (FR)
(72) Inventeur: VOHLGEMUTH, Patrick, F-16110 La Rochefoucauld (FR)
(74) Mandataire: Nony
(86) Numéro de dépôt international: PCT/IB2012/053620
(87) Numéro de publication internationale: WO 2013/014570

(56) Documents cités:
- JP-A- 5 083 899

## Description

La présente invention concerne les machines électriques tournantes et plus particulièrement les boîtiers prévus sur celles-ci pour recevoir par exemple des connexions électriques de la machine et/ou des modules électroniques tels que par exemple un régulateur de tension.

L'invention concerne plus particulièrement un boîtier dont la forme épouse le carter de la machine, étant fixé sur celui-ci, en partie supérieure, un tel boîtier étant encore désigné par l'expression « boîte à bornes ».

Le brevet US 5 192 888 divulgue une boîte à bornes comportant deux parties qui s'assemblent avec interposition d'un joint d'étanchéité. Des ouvertures sont prévues pour l'arrivée de conducteurs électriques.

Le brevet US 6 002 083 divulgue un autre agencement de boîte à bornes comportant deux demi-coquilles qui s'assemblent selon un plan d'assemblage sensiblement oblique.

La demande canadienne CA 85 33 79, le brevet français FR 1 092 897, la demande de brevet français FR 2 778 796, la demande britannique GB 2 340 673, les demandes japonaises JP 05-083899 et JP 57 025 133 et le brevet US 5 769 659 décrivent d'autres exemples de boîtes à bornes.

Le brevet US 5 637 829 divulgue un boîtier dont une paroi présente des lignes de fragilisation de façon à être découpée plus facilement pour former une ouverture de la taille adaptée au passage d'un câble.

La quasi-totalité des boîtes à bornes d'alternateurs industriels sont construites par un assemblage de multiples panneaux métalliques. La confection et l'assemblage de ces panneaux métalliques sont fastidieux et nécessitent la mise en oeuvre d'une grande quantité d'éléments de visserie.

Lorsque la machine électrique est un alternateur qui est associé à un moteur thermique d'entraînement, pour former un groupe électrogène, une armoire de contrôle est généralement prévue.

L'armoire électrique est disposée de façon différente selon les constructeurs, par exemple au-dessus de l'alternateur, sur le ou les côtés ou sur l'arrière. Quelle que soit la position de l'armoire retenue, l'accès à l'intérieur de la boîte à bornes pour effectuer par exemple les réglages d'un régulateur de tension qui y est présent, doit être possible avec un maximum de facilité. Or, la présence de l'armoire de contrôle peut gêner l'accessibilité au boîtier lorsqu'une intervention est nécessaire sur la machine.

L'invention vise à rendre plus facile une intervention sur la machine, de façon à offrir une plus grande diversité d'implantations possibles de l'armoire de contrôle relativement à la machine.

L'invention vise également à simplifier la réalisation de la boîte à bornes.

L'invention a ainsi pour objet, selon un premier de ses aspects, une machine électrique tournante comportant un carter et un boîtier rapporté sur ce carter, en épousant de préférence la forme, le boîtier comportant deux demi-coquilles assemblées l'une à l'autre et au carter par des vis horizontales, l'une au moins des demi-coquilles comportant sur sa face supérieure une trappe d'accès, fixée sur la demi-coquille à l'aide de vis verticales.

Le terme « face supérieure » se réfère à une orientation de la machine dans laquelle celle-ci est observée avec le boîtier situé sur le dessus, l'axe de rotation étant horizontal et dirigé vers l'observateur.

Grâce à l'invention, il est possible d'accéder au contenu du boîtier soit par le dessus, en enlevant la trappe d'accès sans démonter les demi-coquilles, soit par le côté, en désassemblant les demi-coquilles sans enlever la trappe, ce qui facilite grandement la maintenance de la machine et l'accessibilité par exemple à un régulateur de tension sur lequel on souhaite effectuer des réglages alors que la machine est déjà en place sur le châssis du groupe électrogène et que son accessibilité s'en trouve contrariée par l'armoire de contrôle.

Il est à noter que le boîtier peut être réalisé de façon à être entièrement réversible pour permettre un accès à droite ou à gauche, et que deux demi-coquilles identiques peuvent être associées pour former un boîtier sans trappe, ou un boîtier à deux trappes. Dans cette dernière version, l'une des trappes peut être aménagée pour servir de sortie de câbles par le dessus, par exemple. Les deux demi-coquilles peuvent être de forme identique, abstraction faite de la trappe. Chaque demi-coquille peut être de forme générale symétrique par rapport à un plan médian perpendiculaire à l'axe de rotation de la machine. Le cas échéant, la demi-coquille peut présenter des reliefs servant à l'interface avec l'autre demi-coquille qui ne présentent pas cette symétrie au sein de la demi-coquille mais qui existent de façon symétrique sur l'autre demi-coquille, par rapport audit plan de symétrie, quand les deux demi-coquilles sont assemblées entre elles.

Chaque demi-coquille peut comporter deux montants délimités par un bord circulaire adapté à épouser la forme du carter de la machine.

Ainsi, les deux demi-coquilles peuvent présenter des bords de même contour, venant en appui contre le carter de la machine.

De préférence, la trappe obture une ouverture qui s'étend au moins sur une zone supérieure et sur une zone latérale de la demi-coquille.

La fixation des deux demi-coquilles entre elles et de la trappe sur la demi-coquille correspondante s'effectue par des systèmes vis/écrous dans lesquels les vis sont de préférence montées de façon imperdable sur la demi-coquille correspondante.

Les demi-coquilles peuvent être réalisées avec des gorges permettant le passage d'un outil de serrage de ces vis. La présence de ces gorges peut contribuer à rigidifier les demi-coquilles, et à permettre à la boîte à bornes de résister à des contraintes mécaniques accidentelles, malgré une réalisation en matière thermoplastique de la boîte à bornes.

L'interface entre les deux demi-coquilles peut s'étendre sensiblement selon un plan vertical contenant l'axe de rotation de la machine.

La trappe comporte de préférence des crochets venus de moulage avec celle-ci, s'accrochant sur des reliefs correspondants de la demi-coquille, et comportant des passages pour les vis de fixation verticales. Les crochets peuvent être disposés sur des côtés opposés de la trappe, et peuvent venir se loger dans le fond de gorges réalisées sur la demi-coquille.

La trappe peut comporter des parois venant en recouvrement de parois de la demi-coquille, bordant l'ouverture libérée par la trappe quand celle-ci est enlevée.

L'invention a encore pour objet un groupe électrogène comportant une machine électrique telle que définie ci-dessus, accouplée à un moteur thermique, et une armoire de contrôle disposée en regard du boîtier.

En variante, l'armoire est disposée sur le côté du boîtier, de telle sorte que l'accès au contenu du boîtier s'effectue en enlevant la trappe tout en laissant la demi-coquille en place.

L'armoire peut être disposée au-dessus du boîtier, de telle sorte que l'accès au contenu du boîtier s'effectue en enlevant l'ensemble demi-coquille et trappe.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de façon schématique, en perspective, un exemple de machine électrique équipée d'un boîtier selon l'invention, illustrant le démontage de la trappe,
- la figure 2 est une vue analogue à la figure 1, d'une variante d'implantation de l'armoire de contrôle, illustrant le démontage des demi-coquilles,
- la figure 3 représente, en coupe transversale, la demi-coquille dépourvue de trappe,
- la figure 4 est une vue analogue à la figure 3 de la demi-coquille avec trappe,
- la figure 5 est une vue en perspective de la demi-coquille trappe enlevée,
- la figure 6 représente, en vue de côté, la demi-coquille de la figure 5,
- les figures 7 et 8 représentent, en perspective, la trappe isolément,
- la figure 9 représente un détail de réalisation d'un crochet de la trappe,
- la figure 10 est une vue de dessus de la trappe, et
- la figure 11 est une coupe longitudinale de la trappe.

La machine électrique 1 représentée sur les figures est un alternateur destiné à être entraîné en rotation par un moteur thermique, non représenté. L'assemblage de l'alternateur et du moteur thermique se fait par une bride 2.

L'alternateur n'a été que partiellement représenté et l'on voit seulement le carter 6 de la machine, de forme généralement cylindrique de révolution.

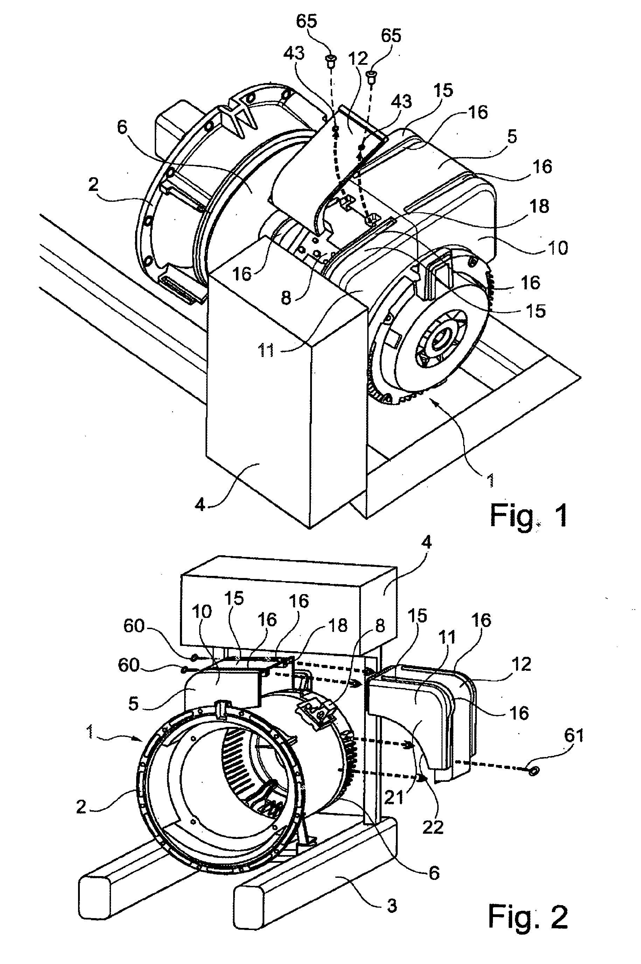

La machine 1 est supportée par un châssis 3 dont est solidaire une armoire de contrôle 4, laquelle selon les fabricants de groupes électrogènes est par exemple positionnée sur le côté de la machine 1 comme illustré à la figure 1 ou sur le dessus de celle-ci, comme illustré à la figure 2.

Une boîte à bornes 5 selon l'invention est prévue sur le dessus du carter 6 de la machine, pour loger par exemple, comme illustré, un régulateur de tension électronique 8.

Cette boîte à bornes 5 comporte deux demi-coquilles 10 et 11, dont l'une est munie d'une trappe amovible 12. En variante, la boîte à bornes 5 comporte deux demi-coquilles 11 identiques, chacune munie de la trappe correspondante 12.

Les deux demi-coquilles 10 et 11 sont réalisées de préférence en matière thermoplastique, par exemple en polypropylène, de préférence comportant une charge minérale, par exemple plus de 15 % en masse de talc, notamment 20 %, et peuvent être initialement dépourvues de passages de câble ouverts.

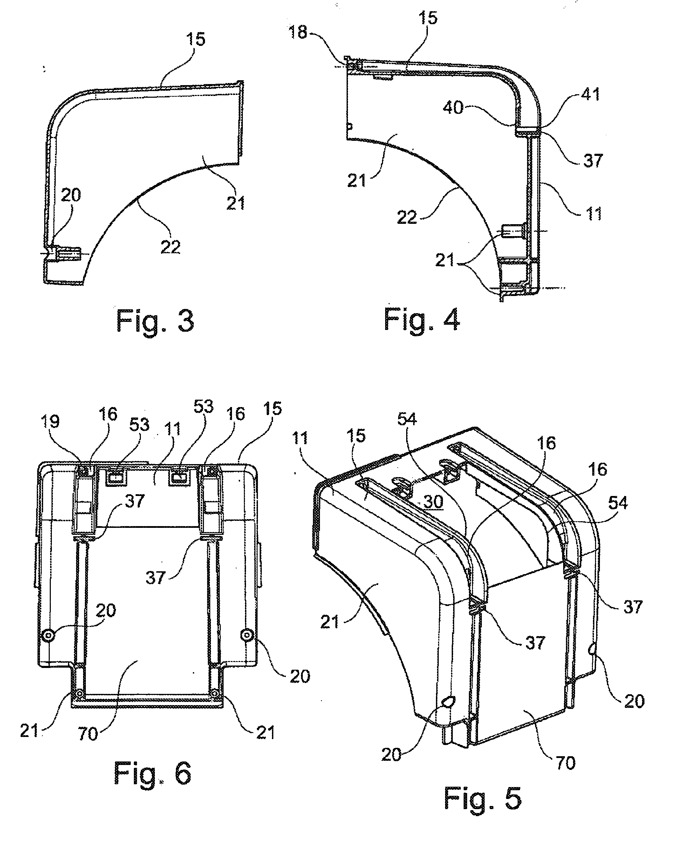

Chaque demi-coquille 10 ou 11 comporte une paroi supérieure 15, pourvue de gorges longitudinales 16, qui sont dans l'exemple considéré orientées transversalement à l'axe de rotation de la machine et qui permettent d'y engager un outil de vissage pour effectuer une fixation d'une demi-coquille sur l'autre, à l'aide de vis 60 représentées schématiquement à la figure 2, engagées à travers des passages 18 prévus à cet effet. L'assemblage des demi-coquilles 10 et 11 se fait par des systèmes vis/écrou, les écrous 19 étant apparents sur la figure 6, étant immobilisés en rotation et en translation dans des logements adaptés, à l'extrémité des gorges 16. Les gorges 16 évitent d'avoir des vis ou écrous en saillie, et facilite l'engagement d'un outil de vissage.

Dans l'exemple considéré, chaque demi-coquille 10 ou 11 comporte deux gorges 16 sur sa paroi supérieure 15.

La paroi supérieure 15 peut être légèrement inclinée par rapport à un plan horizontal. De la sorte, il est possible de favoriser le démoulage de la demi-coquille et d'éviter la stagnation de liquide, notamment d'eau, sur la partie supérieure de la demi-coquille.

Chaque demi-coquille comporte des passages 20 et 21 pour des vis horizontales 61 de fixation sur le carter de la machine, dont l'une d'entre elles est représentée schématiquement à la figure 2.

Les fixations des demi-coquilles 10 et 11 entre elles et sur le carter de la machine sont ainsi faites par des vis 60 et 61 dont les axes sont exclusivement horizontaux, dans une direction normale à l'axe de rotation de la machine.

Chaque demi-coquille 10 ou 11 est réalisée avec des montants transversaux 21, se raccordant à la paroi supérieure 15, ces montants 21 étant délimités inférieurement par un bord circulaire 22 qui épouse la forme cylindrique du carter 6. Les montants 21 sont reliés entre eux par un montant latéral 70.

La demi-coquille 11, qui porte la trappe 12, présente une ouverture 30 qui est obturée par la trappe 12, lorsque celle-ci est fixée sur la demi-coquille 11.

L'ouverture 30 s'étend sur une zone supérieure et sur une zone latérale de la demi-coquille 11.

La trappe 12 présente une forme coudée, avec un arrondi qui épouse celui de la demi-coquille 11 à la jonction de la paroi supérieure 15 et du montant latéral 70.

La trappe 12 est fixée sur sa demi-coquille 11 par des crochets 35 et des vis 65 dont les axes sont exclusivement verticaux dans une direction normale à l'axe de rotation de la machine, ces vis 65 étant représentées schématiquement à la figure 1.

Les crochets 35 sont réalisés en partie inférieure de la trappe 12, sur les côtés opposés de celle-ci, et comportent chacun une dent 36 dirigée dans la direction opposée à la trappe 12, agencée pour s'engager dans une fente correspondante 37 de la demi-coquille 11, cette fente 37 étant réalisée à la base de la gorge 16 associée.

Chaque crochet 35 vient ainsi se loger, quand la trappe 12 est en place, dans un logement 38 formé à la base de la gorge correspondante 16, entre une paroi 40 définissant le fond de la gorge 16 et une paroi en regard 41, traversée par la fente 37. La coopération entre les dents 36 et les fentes 37 s'oppose à un déplacement vertical de la trappe 12. Cette dernière est fixée sur la demi-coquille 11, en partie supérieure, par les vis 65 engagées dans des passages 43 de la trappe 12.

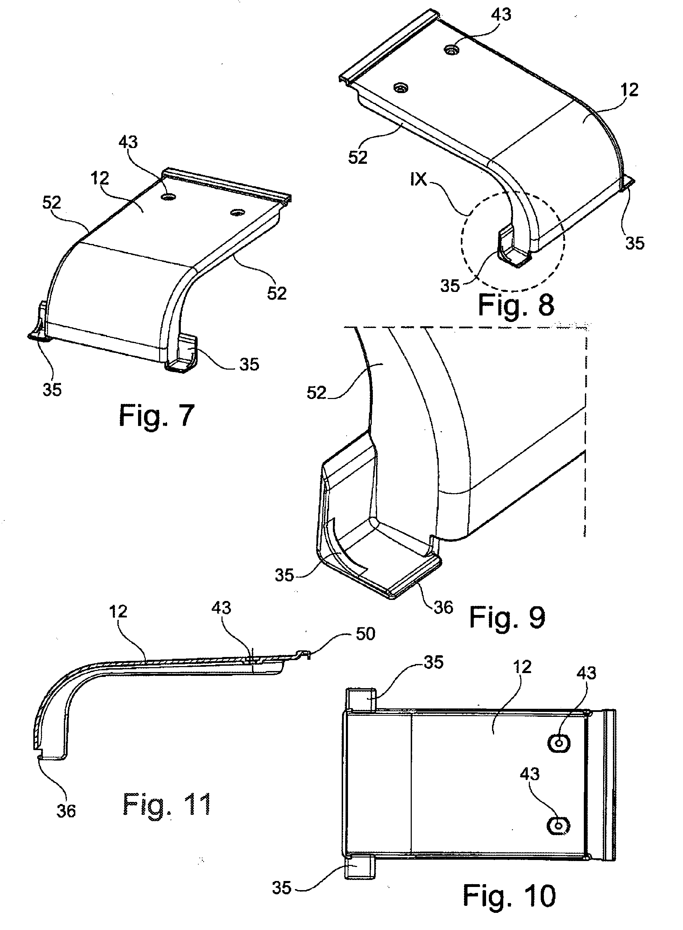

La trappe 12 peut comporter, à son extrémité opposée aux crochets 35, comme visible notamment sur la figure 11, un rebord surélevé 50, destiné à en faciliter le soulèvement.

La trappe 12 comporte des montants latéraux 52 qui viennent en recouvrement, par l'extérieur, d'une paroi 54 bordant longitudinalement les gorges 16 du côté de l'ouverture 30, ce qui garantit l'étanchéité vis-à-vis des projections de liquides éventuelles.

Pour fixer la trappe 12, les dents 36 sont engagées dans les fentes 37 puis la trappe 12 est basculée vers le bas et les vis de fixation 65 sont engagées dans les ouvertures 43, pour coopérer avec des écrous en attente dans des logements 53 de la demi-coquille 11.

Pour retirer la trappe 12, comme illustré à la figure 1, les vis 65 engagées dans les ouvertures 43 sont enlevées, puis la trappe 12 est basculée vers le haut et les crochets 35 sont dégagés des fentes 37.

L'accès au contenu de la boîte à bornes 5 peut ainsi se faire soit :
- par le coté en déposant les vis de fixation latérales 60 et 61 et en translatant l'ensemble demi-coquille plus trappe sur le côté de la machine,
- par le dessus en déposant les vis de fixation verticales 65 de la trappe, puis après un léger pivotement de cette dernière pour désengager les crochets 35, en effectuant une translation verticale.

L'invention n'est pas limitée à un alternateur et la machine électrique est en variante un moteur.

L'expression « comportant un » doit se comprendre comme étant synonyme de « comportant au moins un ».

## Revendications

1. Machine électrique tournante comportant un carter (6) et un boîtier (5) rapporté sur le carter, en épousant la forme, le boîtier comportant deux demi-coquilles (10, 11) assemblées l'une à l'autre et au carter par des vis horizontales (60, 61), l'une (11) des demi-coquilles comportant sur sa face supérieure une trappe d'accès (12), fixée sur la demi-coquille à l'aide de vis verticales (65).

2. Machine selon la revendication 1, les deux demi-coquilles (10, 11) étant de forme identique, abstraction faite de la trappe (12).

3. Machine selon la revendication 1 ou 2, le boîtier (5) logeant un régulateur de tension (8), la machine étant un alternateur.

4. Machine selon l'une quelconque des revendications 1 à 3, la trappe (12) comportant des crochets (35) venus de moulage avec celle-ci, s'accrochant sur des reliefs (37) correspondants de la demi-coquille (11), et comportant des passages (43) pour les vis de fixation verticales (65).

5. Machine selon la revendication 4, les crochets (35) étant disposés sur des côtés opposés de la trappe (12).

6. Machine selon la revendication 4 ou 5, les crochets (35) venant se loger dans le fond de gorges (16) réalisées sur la demi-coquille (11).

7. Machine selon l'une quelconque des revendications 4 à 6, la trappe comportant des parois (52) venant en recouvrement de parois (54) de la demi-coquille, bordant l'ouverture (30) libérée par la trappe (12) quand celle-ci est enlevée.

## Patentansprüche

1. Rotierende elektrische Maschine mit einem Gehäuse (6) und einem unter Formanpassung daran angebrachten Mantel (5), der zwei Halbschalen (10, 11) umfasst, die mittels horizontaler Schrauben (60, 61) miteinander und mit dem Gehäuse verbaut sind, wobei eine (11) der Halbschalen auf ihrer oberen Fläche eine Zugriffsklappe (12) umfasst, die mittels vertikaler Schrauben (65) an der Halbschale befestigt ist.

2. Maschine nach Anspruch 1, wobei die beiden Halbschalen (10, 11) abgesehen von der Klappe (12) eine identische Form aufweisen.

3. Maschine nach Anspruch 1 oder 2, wobei der Mantel (5) einen Spannungsregler (8) aufnimmt und die Maschine ein Generator ist.

4. Maschine nach einem der Ansprüche 1 bis 3, wobei die Klappe (12) an sie angeformte Haken (35), die in entsprechende Ausnehmungen (37) der Halbschale (11) einhaken, und Durchlässe (43) für die vertikalen Schrauben (65) zur Befestigung umfasst.

5. Maschine nach Anspruch 4, wobei die Haken (35) auf einander gegenüberliegenden Seiten der Klappe (12) angeordnet sind.

6. Maschine nach Anspruch 4 oder 5, wobei die Haken (35) am Boden von Auskehlungen (16) aufgenommen werden, die an der Halbschale (11) vorgesehen sind.

7. Maschine nach einem der Ansprüche 4 bis 6, wobei die Klappe Wände (52) umfasst, die Wände (54) der Halbschale am Rand der Öffnung (30) bedecken, die beim Abnehmen der Klappe (12) von dieser freigegeben wird.

## Claims

1. Electrical rotating machine comprising a casing (6) and a compartment (5) fitted to the casing, closely following the shape thereof, the compartment comprising two half-shells (10, 11) assembled to one another and to the casing by horizontal screws (60, 61), one half-shell (11) comprising on its top face an access hatch (12) attached to the half-shell with the aid of vertical screws (65).

2. Machine according to Claim 1, the two half-shells (10, 11) being of identical shape, except for the hatch (12).

3. Machine according to Claim 1 or 2, the compartment (5) housing a voltage regulator (8), the machine being an alternator.

4. Machine according to any one of Claims 1 to 3, the hatch (12) comprising hooks (35) moulded in one piece with the latter, being coupled to matching protrusions (37) of the half-shell (11), and comprising passageways (43) for the vertical attachment screws (65).

5. Machine according to Claim 4, the hooks (35) being placed on opposite sides of the hatch (12).

6. Machine according to Claim 4 or 5, the hooks (35) being housed in the bottom of grooves (16) made in the half-shell (11).

7. Machine according to any one of Claims 4 to 6, the hatch comprising walls (52) overlapping walls (54) of the half-shell, bordering the opening (30) released by the hatch (12) when the latter is removed.
